# EUROPEAN PATENT APPLICATION

(11) **EP 3 547 482 A1**
(43) Date of publication of application: **02.10.2019**
(21) Application number: 19165454.0
(22) Date of filing: 27.03.2019
(51) Int. Cl.: H02J 3/14, H02P 5/74, H02P 27/04, D21D 1/20, D21G 9/00, D21H 11/08

(54) **METHOD AND ARRANGEMENT FOR ADAPTING OPERATION OF MECHANICAL PULPING APPARATUS**

(30) Priority: 29.03.2018 FI 20185302
(71) Applicant: UPM Energy Oy, 00100 Helsinki (FI)
(72) Inventor: Vuori, Mikko, 42100 Jämsä (FI); Heinjoki, Arto, 42100 Jämsä (FI); Saarinen, Jari, 42100 Jämsä (FI)
(74) Representative: Papula Oy

(57) **Abstract**

An MP apparatus comprises a refiner or grinder comprising a rotary part, and an electric motor configured to produce an output torque to rotate said rotary part at a rotational speed. A frequency converter drive is configured to drive said electric motor, said frequency converter drive comprising a control input. A process controller is coupled to said control input and configured to control values of operating parameters of the MP apparatus. Said process controller comprises a command input. It is configured to respond to a command received at said command input by making, through said control input, said frequency converter drive change the rotational speed of said electric motor and/or the output torque of said electric motor between two nonzero values.

## Description

### FIELD OF THE INVENTION

The invention relates to mechanical pulping, often called by its acronym MP for short. In particular the invention relates to methods and arrangements that allow more accurate control of an electric motor of an MP apparatus and better adaptation of its operation in relation to the operation of an electricity grid.

### BACKGROUND OF THE INVENTION

The electric motor of a mechanical refiner, like thermomechanical refiner for example, may have an input power rating in several megawatts or even tens of megawatts. Synchronous motors are typically used, because at least at the time of writing this description their efficiency is better than that of induction motors: at such high power ratings an improvement of even a few per cent in efficiency means easily hundreds of kilowatts of savings in power.

One of the consequences of using synchronous motors is that the rotational speed of a thermomechanical refiner is constant. If changes are to be made to e.g. the production rate, these are accomplished by changing the rate at which chips and/or steam are fed to the process, as well as changing the plate gap between the refiner plates. Another consequence is the very high mechanical stress caused to the axis and other system components at startup. The high power rating also means that the switch-on and switch-off moments of a thermomechanical pulping line must typically be negotiated with the operator of the electricity grid, so that the corresponding significant temporal changes in grid loading can be compensated for.

### SUMMARY

An objective of the present invention is to provide a method and an arrangement for adapting the operation of a mechanical pulping apparatus to the various needs rising from process control viewpoints on one hand and from the operating of an electricity grid on the other hand. Another objective of the invention is to provide a method and an arrangement with which the operation of a mechanical pulping process can be optimized in a number of different situations. Yet another objective of the invention is to enable using a mechanical pulping process in the role of an actively switched reserve of an electricity grid.

These and further advantageous objectives of the invention are achieved by using a frequency converter drive to drive the electric motor of the refiner of a mechanical pulping process.

A method according to the invention is characterized by the features recited in the characterizing part of the independent claim directed to a method.

An arrangement according to the invention is characterized by the features recited in the characterizing part of the independent claim directed to an arrangement.

A computer program according to the invention comprises one or more sets of one or more machine-executable instructions that, when executed by one or more processors, are configured to cause the performing of a method of the kind described above. The computer program may be embodied on a volatile or a nonvolatile computer-readable record medium, for example as a computer program product comprising at least one computer readable non-transitory medium having program code stored thereon.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a thermomechanical pulping apparatus,
**Figure 2** illustrates an example of frequency controlled use of a power reserve,
**Figure 3** illustrates another example of frequency controlled use of a power reserve,
**Figure 4** illustrates a method and a principle of operation,
**Figure 5** illustrates another method and principle of operation, and
**Figure 6** illustrates a thermomechanical pulping plant.

### DETAILED DESCRIPTION

Mechanical pulping as a technical field covers a variety of subfields such as thermomechanical pulping (TMP), chemithermomechanical pulping (CTMP), biothermomechanical pulping (BTMP), RMP (refiner mechanical pulping), and others. In addition to refiner pulping, mechanical pulping includes also grinder pulping. In this description, thermomechanical pulping (TMP) is used as an example. However, the task of driving an electric motor of a refiner or grinder in a mechanical pulping process is essentially similar irrespective of what subfield is actually concerned. Therefore everything that is said in the following can be generalized to any form of mechanical pulping, as understood by the person skilled in the art.

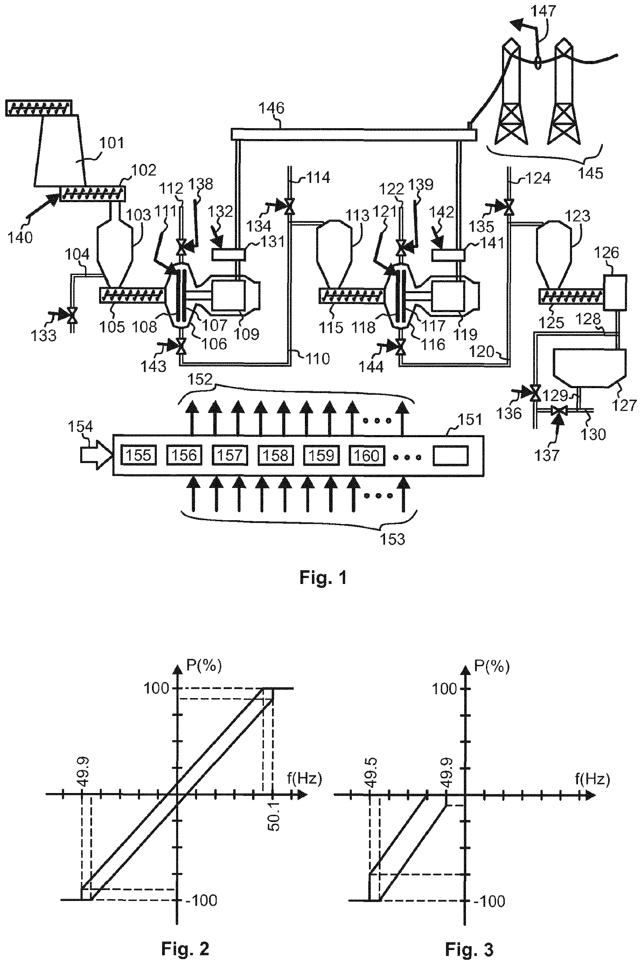

Fig. 1 is a simplified diagram of a thermomechanical pulping apparatus, which could also be called a thermomechanical pulping line. The acronym TMP is used in the following for short. Fig. 1 and the following description relate in particular to a two-stage TMP production line, i.e. one in which the product flows through two refiners in succession. This is not a requirement of the invention, but it helps to understand certain advantageous effects that can be achieved with particular embodiments of the invention. The principle of the invention could be applied in TMP production lines that have only one refining stage, or in TMP production lines that have more than two stages. Further, the invention may be applied in situations where several single or multi-refiner lines are arranged to operate in parallel.

At the beginning of the TMP production line chips are fed to a preheater 101, from which a chips feeder system 102 transfers the preheated chips to a first cyclone 103. The chips feeder system 102 may comprise for example a plug screw feeder, and its operating rate is a major factor in determining the actual production rate of the TMP production line. Water is injected to the first cyclone through a first water inlet 104. Another feeder 105 transfers the hot mixture of chips and water into a primary refiner 106 that comprises a rotary disc 107 and a stationary disc 108. Water can optionally be injected directly to the primary refiner 106 through another water inlet 112.

There is some variance in the use of terms like blade, plate, plate segment, disc, cone, and others, when mechanical refiners are described. In this description the term plate is used to describe a replaceable part of a refiner, the main task of which is to make immediate contact with the chips and/or mass flowing into the refiner and to mechanically process the flowing product into finer form. Plates of a refiner may be attached to, or form a part of, rotary parts such as discs or cones. There are several possible plate, disc, and/or cone configurations of a refiner, but the simple arrangement of one rotary disc and one stationary disc is considered here for simplicity. As such, the mechanical implementation chosen for the refiner(s) has little significance to the present invention, and whatever rotates in the refiner may be generally described as a rotary part. An electric motor 109 is configured to rotate the rotary disc 107 (or, more generally: the rotary part) in the exemplary implementation shown in fig. 1. The electric motor 109 may be for example a synchronous electric motor. Using a synchronous motor may involve the advantage of achieving a better efficiency than with other kinds of electric motors, like induction motors for example.

The hot thick mixture of fibers and steam is taken through a first pipeline 110 to a second cyclone 113. Water can be added through a second water inlet 114. Yet another feeder 115 transfers the hot mixture into a secondary refiner 116 that also comprises a rotary disc 117 and a stationary disc 118 in the exemplary implementation shown in fig. 1. Water can optionally be injected into the secondary refiner 116 through a respective water inlet 122. A second electric motor 119 is configured to rotate the rotary disc 117 of the secondary refiner 116. Also here the mechanical implementation of the refiner may be different, and as a more general characterization it may comprise one or more rotary parts that are rotated by the second electric motor 119. The second electric motor 119 may be for example a synchronous electric motor.

A second pipeline 120 leads to a third cyclone 123, called the separator cyclone, and water can again be added through a third water inlet 124. Yet another feeder 125 transfers the mass to an intermediate holding tank 126 from which it flows to a pulper 127. Further water inlets 128 and 129 before and after the pulper 127 allow controlling the thickness of the resulting mass, which is taken through an outlet pipeline 130 to a series of further holding tanks in which further processing steps such as screening, washing, mixing, dewatering, and the like may take place.

The illustration in fig. 1 is very much simplified and schematic by nature. For example all collection lines that collect steam and waste from the various stages of the process are omitted for reasons of graphical clarity. The omitted parts of the process have little significance to the explanation of the advantageous embodiments of the invention. The illustration in fig. 1 may also contain certain components that are not necessary for a particular embodiment of the invention due to the fact that the pretreatment of chips and their transportation to the refiner may be arranged in alternative manner. Such variations in the process also have little or no significance to the present invention.

The electric power used to operate the first 109 and second 119 electric motors comes from an electricity grid 145 through a power distribution network 146 of the pulp-making plant. As a difference to conventional TMP production lines the thermomechanical pulping apparatus of fig. 1 comprises a first frequency converter drive 131 that is configured to drive the electric motor 109 of the primary refiner 106. Additionally the thermomechanical pulping apparatus of fig. 1 comprises a second frequency converter drive 141 that is configured to drive the electric motor 119 of the secondary refiner 116. The first frequency converter drive 131 comprises a first control input 132, and the second frequency converter driver 141 comprises a second control input 142. It would be possible to provide a frequency converter drive for driving only one of the refiners 106 and 116, but more possibilities are opened for flexible control if the electric motors of both refiners of a two-stage TMP production line are controlled with respective frequency converter drives.

The TMP apparatus of fig. 1 comprises a process controller 151 that is coupled to various control inputs of the TMP apparatus. Some of the control inputs to which the process controller 151 is coupled are the first control input 132 of the first frequency converter drive 131 and the second control input 142 of the second frequency converter drive 142. Through the various control inputs the process controller 151 is configured to control values of operating parameters of the TMP apparatus. Examples of such operating parameters are described in more detail later in this text. Outputs of the process controller 151 that are coupled to control inputs of said kind are collectively shown with the reference designator 152 in fig. 1.

The process controller 151 may also receive measured feedback values online from various parts of the TMP apparatus. Inputs of the process controller 151 that are coupled to receive measured feedback values of said kind, and possible other input values, are collectively shown with the reference designator 153 in fig. 1. The process controller 151 may also receive measured values and other electronically provided information online from elsewhere than the TMP apparatus. An example of such a measured value is the AC frequency of the electricity grid 145, the detection of which is shown schematically with the reference designator 147.

Additionally the process controller 151 comprises a command input 154, through which it can receive commands. The command input 154 may be implemented for example as a part of a user interface that is provided in a control room of the TMP apparatus. Additionally or alternatively the command input 154 may comprise parts and functionalities through which the process controller 151 can receive commands remotely, for example through a data transmission network. Although shown schematically as a single command input 154 in fig. 1, in practice there may be a plurality of command inputs to the process controller 151 for making it receive a plurality of commands from a plurality of sources. For simplicity these are all referred to collectively as the command input 154 in fig. 1.

Some commands that the process controller 151 may receive through the command input 154 are such that the process controller 151 is configured to respond by making, through the appropriate control input, at least one of the frequency converter drives 131 and 141 change the rotational speed and/or the output torque of the respective one of the electric motors 109 or 119 between two non-zero values.

In a conventional TMP refiner the synchronous electric motor was not driven through a frequency converter drive but essentially directly from the electricity grid. Also in such a conventional TMP refiner the electric power taken by the synchronous electric motor could change, but that was only an indirect effect caused by other factors related mainly to the amount of power load requirement of the refiner. The power load requirement of the refiner depends on, for example, the rate at which chips were fed to the process, the plate gap in the refiner, the water content of the mass fed into the refiner, and the general wear condition of the refiner plates (service life of the plates). A certain delay is always associated with such indirect changes in the electric power taken by the synchronous electric motor of a conventional TMP refiner. For example changing the rotation rate of a plug screw that is used as the chips feeder system 102 means that only after about some ten seconds the intended new rate of chips entering the process is observed at the first TMP refiner 106.

Direct control of the electric motor with a frequency converter drive, like in fig. 1, allows much more versatile control of the TMP apparatus. Such versatile control may be based on a variety of viewpoints, as will be described in detail in the following.

According to a first viewpoint the TMP apparatus is considered as a controllable load coupled to an electricity grid. To provide certain background to this viewpoint, some features of frequency control in electricity grids are recapitulated in the following.

The AC frequency of an electricity grid constitutes a relatively reliable indicator of the balance between supply and demand of electric power, so that excessive demand lowers the frequency and vice versa. The operator responsible for the grid may decide how various levels of frequency variation will trigger the use of power reserves. For example in a grid the nominal AC frequency of which is 50 Hz, normal operation reserves may be used to maintain the frequency error below 0.2%, i.e. between 49.9 and 50.1 Hz. If the frequency decreases below 49.9 Hz and all normal operation reserves are in use already, disturbance reserves are taken into use.

Owners of installations with power-generating capability, as well as owners of large loads (installations that consume significant amounts of electric power), may make agreements with the grid operator about the use of their installations as a power reserve in the electricity grid. As the general rule, agile power reserves (i.e. ones that can react quickly and flexibly to variations in supply and demand) are more valuable than ones that are slower to ramp up or down according to need. This rule in power reserve pricing may have significant economic consequences to the owners of such installations that involve inherent complicatedness in controlling the level of consumed power. Or the other way round, the owner of an installation that consumes large amounts of electric energy may achieve significant savings if the power consumption can be adapted quickly and flexibly. Further, during normal operation outside the above described usage as agile power reserve, the load behavior of the refiner arrangement should be kept preferably steady or predictable to avoid unnecessary and non-predicted power peaks towards to grid. One such situation is startup phase, where the frequency converter control according to the invention can help to soft starting of the electric motors of the refiner.

Fig. 2 illustrates an example of a norm that a frequency controlled normal operation reserve of an electricity grid must obey. The task of such a normal operation reserve is to participate in maintaining the AC frequency of the electricity grid between 49.9 and 50.1 Hz. In order to fulfil this purpose, the supply or load that the normal operation reserve provides to the electricity grid must remain within the elongated hexagon. The coordinates of its corner points are (50.1, 100), (50.1, 90), (49.91, -100), (49.9, -100), (49.9, -90), and (50.09, 100). In the coordinates the first number is the AC frequency of the electricity grid in Hz, and the second number is the power of the power reserve in percentage units. The sign convention is such that negative percentages represent reduction in load (or increase in power generation), and positive percentages represent increase in load (or reduction in power generation).

Fig. 3 illustrates an example of a norm that a frequency controlled disturbance reserve of an electricity grid must obey. The task of such a disturbance reserve is to provide additional supply to and/or decrease the load of the electricity grid in situations where the AC frequency of the electricity grid drops below a certain limit. In the example of fig. 3 this limit is 49.9 Hz. The supply or load that the disturbance reserve provides to the electricity grid must remain within the elongated hexagon with the coordinates of its corner points as (49.9, 0), (49.9, -10), (49.55, -100), (49.5, -100), (49.5, -75), and (49.8, 0) .

The operator of the electricity grid may set additional requirements for frequency controlled normal operation reserves or disturbance reserves that obey the norms illustrated in figs. 2 or 3 respectively. Typical additional requirements are for example minimum and maximum nominal power limits; requirements of continuous controllability; provision of real time measurement data to the grid operator; and time based requirements like the maximum delay between a detected change in the AC frequency of the grid and the consequent active change in reserve power. The additional requirements may be bound to the extent and/or rate of change in the grid frequency: for example, the further the grid frequency is from its nominal value, the faster the frequency controlled reserves must react. The additional requirements may set a predetermined response time, within which the appropriate change in reserve power must be effected. Depending on which kind of reserve is concerned and what kind of change is observed in the grid frequency, the predetermined response may be zero (requiring immediate action as fast as the systems can react), in the order of some seconds, or in the order of some minutes at the most.

Above it was already pointed out that a frequency converter drive may make changes in the power fed to an electric motor of a TMP refiner (via changing at least one of the rotational speed or output torque) much faster than in prior art arrangements, in which the power taken by the motor changed only indirectly as a reaction to changes in the values of other process parameters, after a delay. This makes it possible to use the TMP apparatus as a power reserve of the electricity grid 145.

It must be noted, however, that the quality of the pulp produced with a TMP apparatus depends on a complicated combination of the values of interrelated operating parameters. Also the energy efficiency of the process, measured in the amount of electric power used to produce a ton of pulp, is a multidimensional optimization problem. Typically the aim of the manufacturer is to produce pulp of consistent quality while simultaneously running the production process at an optimum point at which the energy efficiency is at a maximum.

Changing the value of one operating parameter, like the rotational speed of the refiner, tends to cause a change in the quality of the produced pulp. Short-term changes in the quality of the produced pulp are not a very serious problem though, because they can be compensated for in the screening and mixing stages to which the pulp is taken after it exits the TMP apparatus through the output 130. Over a longer term the changes can be counteracted by making corresponding changes in the values of other operating parameters of the TMP apparatus. Even if these may take effect somewhat slower than the change in electric power, after a short while the quality of the produced pulp is typically back within acceptable limits as the refiner can be set up optimally for the new rotational speed.

Changing the rotational speed of a refiner also tends to shift the operating point of the refining process so that it may not be at the optimum any more. An important finding is that although shifting the operating point may mean that the energy efficiency is not quite as good any more as it could be, the decrease in energy efficiency may be so small that it can be accepted because more important savings can be achieved elsewhere. For example, a deal made with the operator of the electricity grid about using the TMP apparatus as a power reserve may give the owner of the TMP apparatus an advantage that is larger than the disadvantage caused by intermittently running the process at only almost optimal energy efficiency. It is also possible to make corresponding changes in the values of one or more other operating parameters of the TMP apparatus so that, taken the new value of electric power fed to the electric motor, the energy efficiency is in any case the best that can be achieved.

Thus an embodiment can be presented in which the process controller 151 receives a command to immediately change the amount of electric power consumed by the TMP apparatus. Such a command may be for example a combination in which a user first enables frequency-switched control by giving a corresponding command through the command input 154, and at some moment after that information is electronically provided to the process controller 151 telling that a frequency measurement 147 has exceeded a triggering value. The process controller 151 may be configured to respond to such a command by making, preferably immediately and through at least one of the control inputs 132 or 142, the respective frequency converter drive change the rotational speed of and, correspondingly, the amount of electric power fed into, the respective electric motor 109 or 119. The process controller 151 may be also configured to respond to such a command by commencing one or more other changes in the values of the operating parameters of the TMP apparatus in order to compensate for effects caused by the resulting change in a rotational speed of the respective refiner 106 or 116.

How fast the process controller 151 will effect the change that basically is a change of the amount of electric power fed into the respective electric motor, depends on the capabilities of the devices and of the requirements of the operator of the electric grid. The process controller 151 may be configured to make said frequency converter drive implement said change in at least one of the rotational speed or output torque of said electric motor within a time frame that is shorter than three minutes, preferably less than 30 seconds, more preferably less than 10 seconds, more preferably less than 3 seconds, and more preferably as short as is physically possible with said frequency converter drive.

The TMP apparatus may found best use as a frequency controllable reserve of an electricity grid if a triggering signal (i.e. a signal that indicates that the electric grid frequency has exceeded a limit that necessitates action) cause an immediate reaction. Such a reaction means that the power fed into the respective electric motor begins to change essentially immediately and in an essentially stepless manner, and the change continues as long as the detected change in network frequency continues, or until the capability of the TMP apparatus of changing the power has been exhausted. The change should also stop immediately when the detected change in the electric grid frequency stops, in order not to cause an "overreaction" that could make the electric grid frequency oscillate.

The operator of the electric grid will typically want to verify that a power reserve really is capable of operating as agreed. The verifying may involve a responsiveness test, in which simulated measurement data indicative of changes in electric grid frequency are fed to the control system. After it has been verified that the TMP apparatus is capable of operating as a power reserve as agreed, the TMP apparatus becomes qualified as a frequency controlled power reserve of an electricity grid.

The latency that the product has when it flows through the TMP production line can be utilized for the benefit of compensating for effects caused by a change of rotational speed of the primary refiner. If a sudden change is made to the electric power fed into the first electric motor 109 and consequently to the rotating speed of the first refiner 106, it may cause a sudden change in the quality of the mixture that flows through pipeline 110 towards the secondary refiner 116. However, it takes some time before the "pulse" of different-quality mixture reaches the secondary refiner 116, so the process controller 151 may have time to make more controlled changes there before that. The process controller 151 may be configured to compensate, with changes made in the rotating speed and/or output torque of the second electric motor 119, for changes in product quality effected by changes made in the rotational speed and/or the output torque of the first electric motor 109. Naturally the process controller 151 may make also other changes to achieve the same purpose.

According to a second viewpoint the subtle changes that a frequency converter drive allows to make in the rotational speed and/or the output torque of the electric motor of a TMP refiner are utilized in adapting the production throughput or production rate of the TMP apparatus to any need. Such needs may arise from various sources. For example, it may be known in advance to the operator of the TMP apparatus that the price of electricity will be higher during certain times of the day than during certain other times of the day. If the TMP apparatus should produce a predetermined amount of pulp per day, the production can be planned so that a relatively larger proportion of it is achieved during those times when electricity is cheaper. Another reason for adapting the production throughput may be to maintain the utilization rate of some subsequent intermediate storage facility within giving limits.

As a difference to the first viewpoint explained above, planned adapting of the production throughput may involve more gradual changes in the rotational speed and/or output torque, and consequently in electric power fed to the motor (s) of the TMP refiner(s). Abrupt and immediate changes are not excluded, but gradual changes may involve the advantage that they can be performed in an orchestrated manner together with other changes in the values of the operating parameters of the TMP apparatus. This may help to mitigate or even completely eliminate undesired fluctuations in pulp quality. Additionally or alternatively it may help to maintain the operating point of the process as close to an optimal value as possible at all times.

The process controller 151 may be configured to respond to a command to change a production throughput of the TMP apparatus by making, through at least one of the control inputs 132 or 142, the respective frequency converter drive change at least one of the rotational speed or output torque of the respective electric motor 109 or 119. The change may be immediate, but it may also be more gradual and take effect at some subsequent moment in time. The process controller 151 may be configured to simultaneously make one or more other changes in the values of the operating parameters of the TMP apparatus to optimize an operating efficiency of the TMP apparatus.

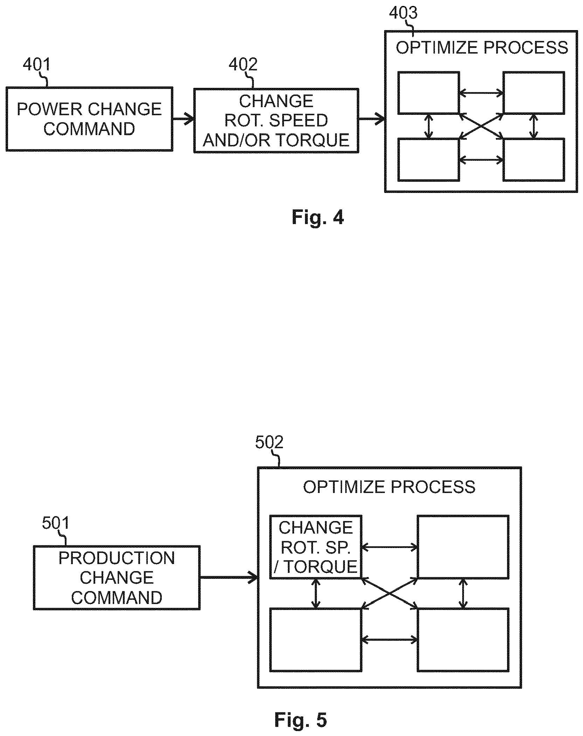

The principal difference between the first and second viewpoints is illustrated with figs. 4 and 5. In fig. 4 the process controller receives at step 401 a command to immediately change the amount of electric power consumed by the TMP apparatus. It responds immediately at step 402 by making, through the control input of at least frequency converter drive, said frequency converter drive change the rotational speed and/or the output torque of the respective electric motor. At step 403 it commences one or more other changes in the values of the operating parameters of the TMP apparatus to compensate for effects caused by the resulting change of rotational speed of the refiner.

In fig. 5 the process controller receives at step 501 a command to change a production throughput of the TMP apparatus. Also in this case it responds by making, through the control input of at least frequency converter drive, said frequency converter drive change at least one of the rotational speed or output torque of the respective electric motor. However, in this case the process controller may simultaneously make one more other changes in the values of the operating parameters of the TMP apparatus to optimize an operating efficiency of the TMP apparatus. This is shown in fig. 5 so that the change in motor speed and/or torque appears as just one component of the process optimization step 502.

Some examples of the other operating parameters are described next. The TMP apparatus may comprise a plate gap control system, which is shown in fig. 1 as comprising a processing part 155 within the process controller 151 and actuator parts 111 and 121 at the respective refiners. The process controller 151 may be configured to implement said one or more other changes in the values of the operating parameters of the TMP apparatus by making the plate gap control system change a plate gap of the respective TMP refiner of the TMP apparatus.

The TMP apparatus may comprise a water injection control system, which is shown in fig. 1 as comprising a processing part 156 within the process controller 151 and actuator parts 133 to 139 at the respective water inlets. The process controller 151 may be configured to implement said one or more other changes in the values of the operating parameters of the TMP apparatus by making the water injection control system change a rate at which water is injected to the TMP process.

The TMP apparatus may comprise a pressure control system, which is shown in fig. 1 as comprising a processing part 157 within the procss controller 151 and actuator parts 143 to 144 at the respective pressure valves. The process controller 151 may be configured to implement said one or more other changes in the values of the operating parameters of the TMP apparatus by making said pressure control system change a pressure in at least one part of the TMP apparatus.

The TMP apparatus may comprise a chips feeder control system, which is shown in fig. 1 as comprising a processing part 158 within the process controller 151 and an actuator part 140 at the chips feeder 102. The process controller 151 may be configured to implement said one or more other changes in the values of the operating parameters of the TMP apparatus by making said chips feeder control system change the rate at which chips are fed into the TMP apparatus.

According to a third viewpoint the TMP apparatus is considered as a dynamic system in which certain factors that affect its operation change over time spontaneously, i.e. without intended interaction from the operator. An example of such a factor is plate wear. In an industrial scale TMP refiner it is not uncommon to change the plates in the refiner after each 1500 to 3000 hours of operation because they are worn out. Already before it is time to change the plates it is probable that the combination of operating parameter values (rotational speed, feed rate, thickness, temperature, pressure etc.) that leads to the most optimal performance is not any more the same as it was when the plates were new and just installed.

On the other hand, plate wear is an example of a phenomenon that is relatively easy to predict on the basis of past experience. If the operating conditions stay the same, and if the plates were of a known kind to start with, they will wear in an essentially known way. By performing experiments and measurements it is possible to prepare a model profile of how the operating parameter values should be changed during the lifetime of the plates to maintain the refiner performance as close to the optimum as possible. One of said operating parameters is the rotational speed of the refiner, which is directly determined by the rotational speed and/or the output torque of the electric motor, which in turn can be controlled with the frequency converter drive.

Thus according to an embodiment the process controller 151 comprises a timer 159 that is configured to measure the age of the plates in the refiners 106 and 116. The process controller 151 can be configured to make, through the control input of at least one of the first 131 and second 141 frequency converter drives, the respective frequency converter drive change a rotational speed and/or output torque of the respective electric motor 109 or 119 as a function of the age of the plates measured by the timer 159.

Additionally or alternatively, factors like aging, wear, and damaging of the plates can be estimated from other factors than time. For example, it is possible to equip a refiner with measurement devices that may measure various quantities of the refiner itself. Non-limiting examples of such measurement devices are optical imagers that observe optically the actual refining process between the plates; vibration detectors that measure mechanical vibrations; acoustic detectors that detect acoustic signals transmitted through the mechanical structures of the refiner; and strain gauges that detect microscopic elastic deformations caused by tension. The process controller 151 may comprise a measurement data processor 160 configured to collect measurement data from measurement devices at or close to the refiner 106 or 116, and the process controller 151 may be configured to make, through the control input of at least one of the first 131 and second 141 frequency converter drives, the respective frequency converter drive change a rotational speed and/or output torque of the respective electric motor 109 or 119 as a function of measurement signals processed by the measurement data processor 160.

Additionally or alternatively, there may be measurement devices configured to measure properties of the product coming out of one or more refiners in the apparatus. Such measurement devices may comprise online devices configured to make measurements in the flow of product, and/or they may comprise offline devices to which samples of the product are taken separately. The measurement data processor 160 may be configured to collect also such measurement data, and the process controller 151 may be configured to take such measurement data into account in determining the way in which any of the electric motors 109 or 119 should be controlled through their respective frequency converter drives.

One advantage of a frequency converter drive compared to the conventional direct driving of a synchronous electric motor in a TMP apparatus is the ability to actively change the rotational speed. Above one example was considered, namely changing the rotational speed as a function of the plates aging. It is also possible to use the frequency converter drive to actively maintain the rotational speed constant despite changes in other process parameters. If the change in other process parameters is such that the loading of the electric motor changes, actively maintaining the rotational speed constant then typically results in changing the output torque of the electric motor.

Another possibility is that at least one of the frequency controller drives 131 or 141 is configured to allow a rotational speed of the respective electric motor 109 or 119 to float during some other change in process parameters: for example when the process controller changes a plate gap value of the respective refiner 106 or 116 in the TMP apparatus. This may happen for example when the output torque of the electric motor is actively kept constant, so it is a kind of inverse of the case considered above. In both cases maintaining one quantity actively constant means actually changing the other quantity.

Another embodiment that comes under the third viewpoint is to consider the rotational speed and/or output torque of the electric motor as one of the operating parameters that the process controller will continuously adapt in order to optimize the performance of the process. Thus the process controller 151 may be configured to determine the rotational speed and/or output torque of any of the electric motors of the refiners by executing an optimization algorithm that optimizes the consumption of energy per unit of pulp produced by the TMP apparatus.

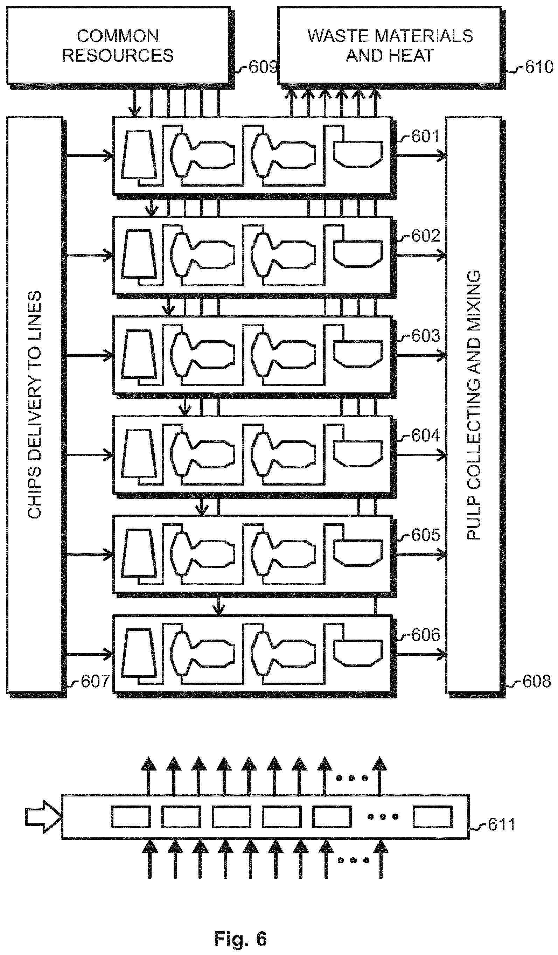

Fig. 6 illustrates schematically a TMP plant that has six parallel TMP production lines 601 to 606. A common chips delivery part 607 is provided and arranged to take care of delivering the right amount of chips of the right quality to each of the lines. A common pulp collecting and mixing part 608 is provided and arranged to take care of collecting the produce of each line and performing the later processing stages like mixing, screening, washing, and dewatering. A common resources part 609 is provided and arranged to take care of providing the lines with resources such as electric power, water, and process chemicals. A common waste recovery part 610 is provided and arranged to take care of collecting and postprocessing waste materials and waste heat from the lines.

The plant controller 611 may be common for all the parallel TMP production lines 601 to 606 of the plant. It may be configured to control, directly or indirectly, the frequency converter drives in the parallel TMP production lines 601 to 606. It may also comprise control functions of the other parts of the plant.

According to an embodiment the plant controller 611 is configured to make, through said controlling of said frequency converter drives, orchestrated changes in the amount of electric power fed into the electric motors of the parallel TMP production lines 601 to 606. One aim of such orchestrated changes may be to reduce changes in total electric power consumed by the pulp-making plant.

As an example, a situation may be considered in which the pulp-making plant is running at less than full capacity, so that at least one of the parallel TMP production lines 601 to 606 is currently idle and the electric motors of its refiners consume essentially no power at all. There may occur a need to run down one of those TMP production lines that has been operational, for example because it needs to be serviced. In order not to reduce the overall production level, another TMP production line that has been idle should be wound up to full operation. The plant controller 611 may use the frequency converter drives of the electric motors of the TMP production lines involved so that the electric power quota liberated by the TMP production line to be run down will be smoothly taken over by another TMP production line to be wound up. At the best case there may be little or no change in the overall power consumption of the pulp-making plant, so any adversary effects to the electricity grid are minimized.

Another example may involve a sudden problem in the operation of one of the TMP production lines 601 to 606. For example, a chips feeder system may become jammed or a refiner plate may come loose, which may cause an emergency shutdown of the respective TMP production line. Taken the considerable input power rating of the electric motor of even a single refiner, an emergency shutdown would conventionally mean a large instantaneous drop in the electric power consumed by the pulp-making plant, probably resulting in a sudden increase in electric grid frequency. According to an embodiment the plant controller 611 may at least partly mitigate this effect by responding to the emergency shutdown of (or other sudden decrease of electric power drawn by) one TMP production line by instantaneously changing the rotational speed and/or output torque of at least one of the electric motors of the refiners of the other TMP production lines. The frequency converter drives enable making such changes within a time frame of at most some seconds, while in conventional pulp-making plants any corrective action concerning the consumption of electric power would have taken place much more slowly. It could only be accomplished indirectly by changing other process parameters, like chips feeding rate, of the still operational TMP production lines.

The description of the drawings above can also be considered as illustrating methods according to embodiments of the invention. A method for controlling a thermomechanical pulping - later TMP - production line according to an embodiment may comprise:
- receiving a command requiring to immediately change an amount of electric power consumed by said TMP production line, and
- as a response to said command, making a frequency converter drive change at least one of:
   -- a rotational speed of an electric motor used to rotate a rotary part of a refiner, or
   -- an output torque of said electric motor,
   between two non-zero values. The change may advantageously be made within a time frame of at most some seconds.

The method may comprise:
- making said frequency converter drive change at least one of the rotational speed or output torque of said electric motor, and
- commencing one or more other changes in values of operating parameters of the TMP production line to compensate for effects caused by the resulting change of amount of electric power fed into said electric motor.

According to the method said frequency converter drive may be made to implement said change in at least one of the rotational speed or output torque of said electric motor within a time frame that is shorter than three minutes, preferably less than 30 seconds, more preferably less than 10 seconds, more preferably less than 3 seconds, and more preferably as short as is physically possible with said frequency converter drive.

The method may comprise:
- making said frequency converter drive change at least one of the rotational speed or output torque of said electric motor, and
- simultaneously making one or more other changes in values of operating parameters of the TMP production line to optimize an operating efficiency of the TMP production line.

According to an embodiment, said one or more other changes in said values of the operating parameters of the TMP production line may comprise at least one of:
- changing a plate gap of the refiner,
- changing a rate at which water is injected to the TMP process executed by the TMP production line,
- changing a pressure in at least one part of the TMP production line,
- changing a rate at which chips are fed to the TMP production line.

The method may comprise:
- measuring an age of plates in a refiner of the TMP production line, and
- changing a rotational speed of said electric motor as a function of the measured age of the plates.

The method may comprise:
- collecting measurement data from measurement devices at or close to said refiner, and
- changing a rotational speed of said electric motor as a function of measurement signals produced by processing the measurement data.

The method may comprise:
- making coordinated changes in the magnitudes of at least one of the rotational speed or output torque of first and second electric motors that rotate respective rotary parts of respective primary and secondary refiners of said TMP production line, for accomplishing at least one of:
   -- compensating, with changes made in at least one of the rotational speed or output torque of said second electric motor, for changes in product quality effected by changes made in at least one of the rotational speed or output torque of the first electric motor, or
   -- reducing changes in total electric power consumed by said TMP production line.

The method may comprise:
- allowing a rotational speed of at least one of said electric motors to float when changing a plate gap value of at least of said refiners.

The method may comprise:
- determining at least one of the rotational speed or output torque of any of said electric motors by executing an optimization algorithm that optimizes the consumption of energy per unit of pulp produced by said TMP production line.

The method may comprise:
- making, through controlling respective frequency converter drives, orchestrated changes in the amount of electric power fed into the electric motors of parallel TMP production lines of a pulp-making plant, thus reducing changes in total elec-tric power consumed by said pulp-making plant.

The description of the drawings above can also be considered as illustrating a computer program for controlling a thermomechanical pulping production line, comprising one or more sets of one or more machine-executable instructions that, when executed by one or more processors, are configured to cause the performing of a method of a kind described above.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A mechanical pulping - later MP - apparatus, comprising:
- a refiner or grinder comprising a rotary part
- an electric motor configured to produce an output torque to rotate said rotary part at a rotational speed
- a frequency converter drive configured to drive said electric motor, said frequency converter drive comprising a control input and
- a process controller coupled to said control input and configured to control values of operating parameters of the MP apparatus, said process controller comprising a command input;
wherein said process controller is configured to respond to a command received at said command input by making, through said control input, said frequency converter drive change at least one of:
- the rotational speed of said electric motor, or
- the output torque of said electric motor,
between two non-zero values;
wherein said MP apparatus is qualified as a frequency controlled power reserve of an electricity grid.

2. An MP apparatus according to claim 1,
wherein said process controller is configured to respond to a command to immediately change the amount of electric power consumed by said MP apparatus by
- making, through said control input, said frequency converter drive change at least one of the rotational speed or output torque of said electric motor, and
- commencing one or more other changes in said values of the operating parameters of the MP apparatus to compensate for effects caused by the resulting change of a rotational speed of said refiner or grinder.

3. An MP apparatus according to claim 2,
wherein said process controller is configured to make said frequency converter drive implement said change in at least one of the rotational speed or output torque of said electric motor within a time frame that is shorter than three minutes, preferably less than 30 seconds, more preferably less than 10 seconds, more preferably less than 3 seconds, and more preferably as short as is physically possible with said frequency converter drive.

4. An MP apparatus according to any of claims 1 to 3, wherein said process controller is configured to respond to a command to change a production throughput of said MP apparatus by
- making, through said control input, said frequency converter drive change at least one of the rotational speed or output torque of said electric motor, and
- simultaneously making one or more other changes in said values of the operating parameters of the MP apparatus to optimize an operating efficiency of the MP apparatus.

5. An MP apparatus according to any of claims 2 to 4, wherein said rotary part is a rotary part of a refiner, and the apparatus comprises a plate gap control system, wherein said process controller is configured to implement said one or more other changes in said values of the operating parameters of the MP apparatus by making said plate gap control system change a plate gap of the refiner.

6. An MP apparatus according to any of claims 2 to 5, comprising a water injection control system,
wherein said process controller is configured to implement said one or more other changes in said values of the operating parameters of the MP apparatus by making said water injection control system change a rate at which water is injected to the MP process.

7. An MP apparatus according to any of claims 2 to 6, comprising a pressure control system, wherein said process controller is configured to implement said one or more other changes in said values of the operating parameters of the MP apparatus by making said pressure control system change a pressure in at least one part of the MP apparatus.

8. An MP apparatus according to any of claims 2 to 7, comprising a chips feeder control system, wherein said process controller is configured to implement said one or more other changes in said values of the operating parameters of the MP apparatus by making said chips feeder control system change the rate at which chips are fed into the MP apparatus.

9. An MP apparatus according to any of the preceding claims, wherein:
- the rotary part is a rotary part of a refiner,
- the process controller comprises a timer configured to measure an age of plates in said refiner, and
- the process controller is configured to make, through said control input, said frequency converter drive change a rotational speed of said electric motor as a function of the age of the plates measured by said timer.

10. An MP apparatus according to any of the preceding claims, wherein:
- the process controller comprises a measurement data processor configured to collect measurement data from measurement devices at or close to the refiner or grinder, and
- the process controller is configured to make, through said control input, said frequency converter drive change a rotational speed of said electric motor as a function of measurement signals processed by the measurement data processor.

11. An MP apparatus according to any of the preceding claims, wherein said electric motor is a synchronous electric motor.

12. An MP apparatus according to any of the preceding claims, wherein:
- the rotary part is a rotary part of a refiner,
- said refiner is a primary refiner, and the MP apparatus comprises a secondary refiner coupled to receive and process further the output of the primary refiner,
- said electric motor is a first electric motor configured to rotate a rotary part of said primary refiner, and said frequency controller drive is a first frequency controller drive configured to drive said first electric motor,
- the MP apparatus comprises a second electric motor configured to rotate a rotary part of said secondary refiner, and a second frequency controller drive configured to drive said second electric motor, said second frequency converter drive comprising a second control input,
- the process controller is coupled to said second control input and configured to make, through said control inputs of the first and second frequency controller drives, coordinated changes in the magnitudes of at least one of the rotational speed or output torque of said first and second electric motors.

13. An MP apparatus according to claim 12,
wherein the process controller is configured to compensate, with changes made in the amount of electric power fed into the second electric motor, for changes in product quality effected by changes made in the amount of electric power fed into the first electric motor.

14. An MP apparatus according to any of the preceding claims, wherein:
- at least one of said frequency controller drives is configured to allow a rotational speed of said electric motor to float when said process controller changes a plate gap value of said MP apparatus.

15. An MP apparatus according to any of the preceding claims, wherein:
- said process controller is configured to determine at least one of the rotational speed or output torque of any of said electric motors by executing an optimization algorithm that optimizes the consumption of energy per unit of pulp produced by said MP apparatus.

16. A pulp-making plant comprising at least one MP apparatus according to any of claims 1 to 15.

17. A pulp-making plant according to claim 16, comprising:
- a plurality of parallel MP production lines, each MP production line comprising at least one refiner or grinder in which a rotary part is configured to be rotated by an electric motor driven with a frequency converter drive, and
- a plant controller configured to control, directly or indirectly, the frequency converter drives in said parallel MP production lines;
wherein said plant controller is configured to make, through said controlling of said frequency converter drives, orchestrated changes in the amount of electric power fed into the electric motors of said parallel MP production lines, thus reducing changes in total electric power consumed by said pulp-making plant.

18. A method for using a mechanical pulping - later MP - production line as a qualified frequency controlled power reserve of an electricity grid, comprising:
- receiving a command indicative of a frequency of said electricity grid and requiring to immediately change an amount of electric power consumed by said MP production line, and
- as a response to said command, making a frequency converter drive change at least one of:
-- a rotational speed of a electric motor used to rotate a rotary part of a refiner or grinder, or
-- an output torque of said electric motor,
between two non-zero values.

19. A method according to claim 18, comprising:
- making said frequency converter drive change at least one of the rotational speed or output torque of said electric motor, and
- commencing one or more other changes in values of operating parameters of the MP production line to compensate for effects caused by the resulting change of amount of electric power fed into said electric motor.

20. A method according to claim 19, wherein said frequency converter drive is made to implement said change in at least one of the rotational speed or output torque of said electric motor within a time frame that is shorter than three minutes, preferably less than 30 seconds, more preferably less than 10 seconds, more preferably less than 3 seconds, and more preferably as short as is physically possible with said frequency converter drive.

21. A method to any of claims 18 to 10, comprising:
- making said frequency converter drive change at least one of the rotational speed or output torque of said electric motor, and
- simultaneously making one or more other changes in values of operating parameters of the MP production line to optimize an operating efficiency of the MP production line.

22. A method according to any of claims 19 to 21, wherein said one or more other changes in said values of the operating parameters of the MP production line comprise at least one of:
- changing a plate gap of a refiner,
- changing a rate at which water is injected to the MP process executed by the MP production line,
- changing a pressure in at least one part of the MP production line,
- changing a rate at which chips are fed to the MP production line.

23. A method according to any of claims 18 to 22, comprising:
- measuring an age of plates in a refiner of the MP production line, and
- changing a rotational speed of said electric motor as a function of the measured age of the plates.

24. A method according to any of claims 18 to 23, comprising:
- collecting measurement data from measurement devices at or close to a refiner, and
- changing a rotational speed of said electric motor as a function of measurement signals produced by processing the measurement data.

25. A method according to any of claims 18 to 24, comprising:
- making coordinated changes in the magnitudes of at least one of the rotational speed or output torque of first and second electric motors that rotate respective rotary parts of respective primary and secondary refiners of said MP production line, for accomplishing at least one of:
-- compensating, with changes made in at least one of the rotational speed or output torque of said second electric motor, for changes in product quality effected by changes made in at least one of the rotational speed or output torque of the first electric motor, or
-- reducing changes in total electric power consumed by said MP production line.

26. A method according to any of claims 18 to 25, comprising:
- allowing a rotational speed of at least one of said electric motors to float when changing a plate gap value of at least of said refiners.

27. A method according to any of claims 18 to 26, comprising:
- determining at least one of the rotational speed or output torque of any of said electric motors by executing an optimization algorithm that optimizes the consumption of energy per unit of pulp produced by said MP production line.

28. A method according to any of claims 18 to 27, comprising:
- making, through controlling respective frequency converter drives, orchestrated changes in the amount of electric power fed into the electric motors of parallel MP production lines of a pulp-making plant, thus reducing changes in total electric power consumed by said pulp-making plant.

29. A computer program for controlling a thermomechanical pulping production line, comprising one or more sets of one or more machine-executable instructions that, when executed by one or more processors, are configured to cause the performing of a method according to any of claims 18 to 28.
